# FASCICULE DE BREVET EUROPEEN

(11) **EP 3 562 757 B1**
(45) Date de publication et mention de la délivrance du brevet: **14.10.2020**
(21) Numéro de dépôt: 17829329.6
(22) Date de dépôt: 27.12.2017
(51) Int. Cl.: B65D 83/20, B65D 83/22, B65D 83/24, B29C 73/16

(54) **ENSEMBLE DIFFUSEUR POUR AEROSOL**
SPRÜHKOPF FÜR AEROSOLBEHÄLTER
SPRAYING HEAD FOR AEROSOL CAN

(30) Priorité: 27.12.2016 FR 1670791
(43) Date de publication de la demande: 06.11.2019
(73) Titulaire: Compagnie Générale des Etablissements Michelin, 63000 Clermont-Ferrand (FR)
(72) Inventeur: SOUYRI, Philippe, 63040 Clermont-Ferrand Cedex 09 (FR); REBOULLET, Olivier, 63040 Clermont-Ferrand Cedex 9 (FR)
(74) Mandataire: Bauvir, Jacques
(86) Numéro de dépôt international: PCT/IB2017/058429
(87) Numéro de publication internationale: WO 2018/122738

(56) Documents cités:
- EP-A1- 2 881 337
- WO-A1-2006/038487
- WO-A1-2011/003752
- WO-A1-2011/138186
- US-A1- 2009 108 021
- US-A1- 2011 068 132

## Description

### DOMAINE TECHNIQUE DE L'INVENTION

La présente invention concerne un ensemble diffuseur pour bouteille aérosol, en particulier pour bouteille de liquide anti-crevaison (ou d'étanchéité) pour pneumatique.

### ETAT DE LA TECHNIQUE ANTERIEURE

Les bouteilles aérosol sont bien connues de longue date. La plupart des bouteilles comportent un embout diffuseur permettant de faciliter l'expulsion du liquide de la bouteille.

**On** connaît par exemple le document FR2403113 qui décrit une valve d'aérosol conçue pour permettre un remplissage rapide en gaz propulseur liquéfié de la bombe aérosol sur laquelle elle sera montée.

**Le** document FR2590503 décrit un embout orientable pour pulvérisateur aérosol. L'embout comporte un tube souple connecté au gicleur et au poussoir. Le gicleur est monté mobile en rotation, pour faciliter l'utilisation de l'ensemble.

Le document FR2907767 décrit un dispositif diffuseur pour bombe aérosol à actionnement sécurisé comportant un capot, un embout destiné à se fixer sur une soupape de diffusion de la bombe, l'embout étant mobile selon une direction d'actionnement de manière à actionner la soupape de diffusion, et un actionneur adapté à provoquer le mouvement de l'embout selon la direction d'actionnement. L'actionneur dispose d'un second degré de liberté entre une position initiale de sécurité dans laquelle l'actionneur est bloqué par rapport à la direction d'actionnement et au moins une position débloquée dans laquelle un mouvement d'actionnement est possible, une découpe étant prévue dans le capot pour l'actionneur, l'actionneur comportant une tranche qui se trouve, dans la position initiale de sécurité, en regard d'un bord de la découpe parallèlement à la direction d'actionnement, le mouvement selon le second degré de liberté étant un mouvement d'enfoncement jusqu'à dégager la tranche vis-à-vis du bord.

Le document US2011/068132 A1 décrit un dispositif de gonflage de pneumatique.

La plupart des embouts requièrent un force d'actionnement importante de la part de l'utilisateur. La plupart du temps cette force devant être maintenue pendant toute la phase d'expulsion.

Or, l'apparition des bouteilles d'agent anti-crevaison n'est pas sans causer un certains nombres de difficultés aux utilisateur, car le produit anti-crevaison doit souvent être utilisé dans un contexte difficile, parfois par temps froid, la nuit, sous la pluie ou la neige. Contrairement à la quasi-totalité des produits aérosol, qu'on utilise à très petites doses, comme par exemple les purificateurs d'air, la durée de la phase d'expulsion est particulièrement longue (par exemple de l'ordre de 2 à 3 minutes) pour un produit anti-crevaison, puisque la totalité du contenu de la bouteille doit être expulsée dans le pneumatique à réparer.

Pour pallier ces différents inconvénients, l'invention prévoit différents moyens techniques.

### EXPOSE DE L'INVENTION

Tout d'abord, un premier objet de l'invention consiste à prévoir un organe de commande pour bouteille aérosol permettant de gérer de façon simple et ergonomique l'expulsion du liquide de la bouteille.

Un autre objet de l'invention consiste à prévoir un organe de commande pour bouteille aérosol minimisant l'effort mécanique à exercer par l'utilisateur.

Encore un autre objet consiste à prévoir un organe de commande pour bouteille aérosol permettant de maintenir un mode de diffusion continu en minimisant l'effort de l'utilisateur.

Pour ce faire, l'invention prévoit un ensemble diffuseur de produit aérosol pour bouteille sous pression, comprenant :
- un levier de commande pourvu d'un corps planaire permettant de commander la diffusion du liquide aérosol
- un bloc diffuseur comportant un boitier annulaire à l'intérieur duquel un actionneur à came est monté mobile axialement entre une position de stockage de l'aérosol et une position de diffusion de l'aérosol, leditactionneur à came comprenant :
   - (i) un plateau contre-came, guidé par des plots de guidage fixés sur le boitier et coopérant avec des encoches correspondantes du plateau contre-came ;
   - (ii) un logement d'embout de bouteille aérosol, agencé sur le plateau contre-came et adapté pour recevoir l'embout d'une bouteille aérosol ;
   - (iii) un conduit et un bec diffuseur, reliés au logement d'embout, et permettant au liquide de diffuser vers un point de déversement du liquide aérosol ;
- le levier de commande étant monté pivotant sur le boîtier annulaire ;
- l'actionneur à came pouvant être poussé axialement vers la bouteille d'aérosol par au moins une came pivotante, montée sur le corps planaire du levier de commande ;
- l'actionneur à came étant poussé axialement à l'opposé de la bouteille d'aérosol par au moins une patte élastique de fixation, reliant élastiquement l'actionneur à came au boitier annulaire;
- l'actionneur à came étant venu de matière avec le boîtier annulaire, formant ainsi un bloc diffuseur monopièce.

Une telle architecture permet un actionnement facile et particulièrement ergonomique. Le grand bras de levier ainsi que l'importante course angulaire d'actionnement du levier permettent de réduire l'effort d'actionnement pour l'utilisateur. Les différentes pièces sont simples à produire (par exemple par moulage) pour un coût de revient de l'ensemble particulièrement favorable.

Cet agencement permet de maintenir une pré-contrainte sur l'actionneur à came. Les pattes permettent par ailleurs de fabriquer l'ensemble diffuseur d'une seule et unique pièce venue de matière. Par exemple, au moulage, les pattes permettent d'assurer l'injection de matière d'une pièce vers l'autre.

L'actionneur à came étant venu de matière avec le boîtier annulaire, cet agencement permet de fabriquer le bloc diffuseur en une seule opération, et supprime tout besoin ultérieur d'assemble entre le boîtier annulaire et le l'actionneur à came.

Selon un mode de réalisation avantageux, le boitier annulaire comprend des ouvertures sensiblement opposées formant un axe de pivotement P-P et le levier de commande comprend deux pivots opposés formant un axe de pivotement P'-P' et aptes à coopérer avec les ouvertures du boitier annulaire pour former un montage pivotant du levier de commande dans le boitier annulaire, avec superposition des axes P-P et P'-P'.

Cet agencement permet de fabriquer séparément les deux principales pièces de l'ensemble, et de les assembler facilement par la suite. Le mode de pivotement des pièces assemblées procure un fonctionnement aisé et fiable.

**De** manière avantageuse, le levier de commande comprend deux cames distantes l'une de l'autre, entre lesquelles le logement d'embout peut s'insérer.

**Cet** agencement permet de répartir convenablement l'effort à exercer par les cames.

Par exemple, les deux cames sont adaptées pour exercer un effort axial F vers la bouteille par contact sur le plateau contre-came, de chaque côté du logement d'embout.

Selon encore un mode de réalisation avantageux, le levier de commande comprend un loquet de sécurisation sécable, monté sensiblement dans le prolongement du corps planaire.

La bombe, sécurisé, ne peut donc pas être actionnée accidentellement, sans une action spécifique de l'utilisateur afin de déverrouiller l'ensemble.

De manière avantageuse, le boitier annulaire comprend une ouverture latérale prévue pour permettre le passage du bec diffuseur radialement au-delà du boitier.

De manière avantageuse, au moins une came comprend un bec de verrouillage permettant de placer le levier de commande selon l'une ou l'autre de deux positions bistables (ouverte ou fermée), la position fermée correspondant à la position de stockage de l'aérosol et la position ouverte correspondant à la position de diffusion de l'aérosol.

Cet agencement permet de bloquer l'ensemble en position de diffusion de l'aérosol. Cette caractéristique est particulièrement utile pour utiliser une bombe dont une grande partie du contenu -voire la totalité de la bouteille- doit être libéré, car cette opération est relativement longue.

L'invention prévoit également une bombe aérosol utilisant un ensemble diffuseur tel que préalablement décrit.

### DESCRIPTION DES FIGURES

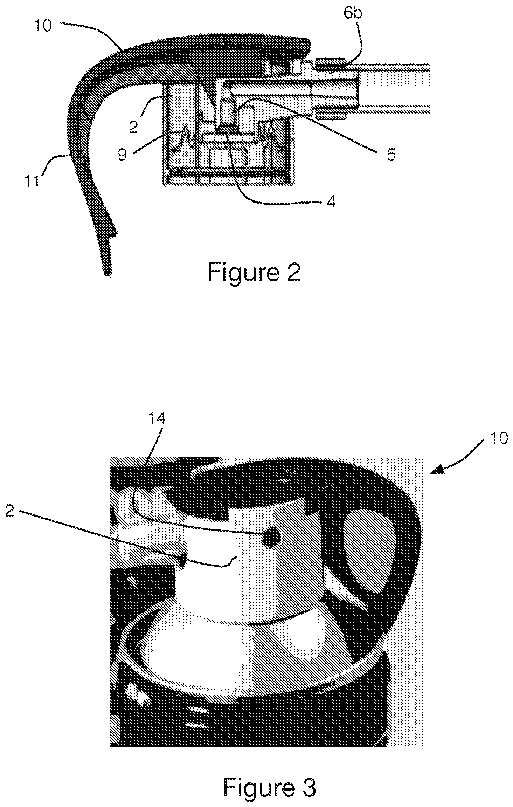

Tous les détails de réalisation sont donnés dans la description qui suit, complétée par les figures 1a à 3, présentées uniquement à des fins d'exemples non limitatifs, et dans lesquelles:
- la figure 1a est une vue en perspective du levier de commande ;
- la figure 1b est une vue en perspective du bloc diffuseur ;
- la figure 2 est une vue en coupe d'un exemple de réalisation d'un ensemble diffuseur ;
- la figure 3 est une vue en perspective d'une bouteille aérosol munie d'un ensemble diffuseur.

### DESCRIPTION DETAILLEE DE L'INVENTION

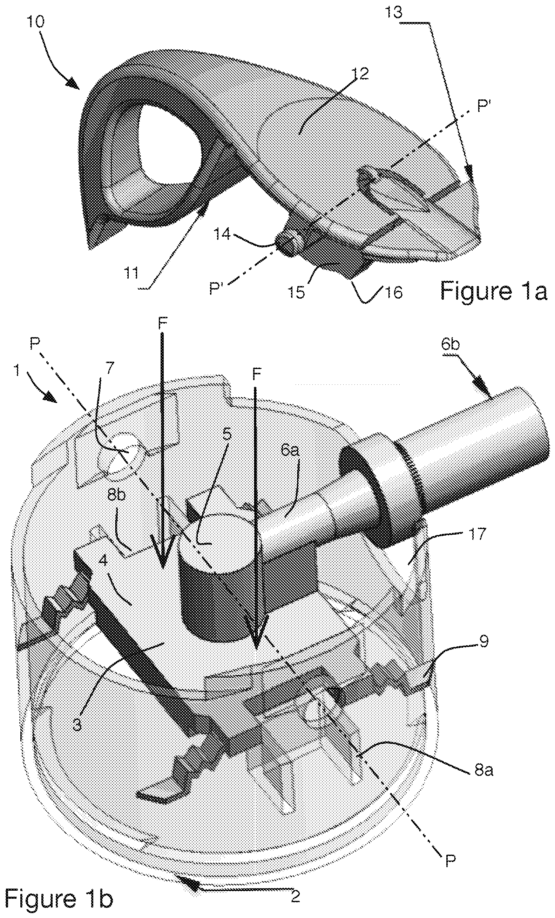

Les figures 1a et 1b illustrent un exemple de réalisation d'un ensemble diffuseur en vue éclatée. Cet ensemble comporte deux éléments principaux, soit un bloc diffuseur 1, et un levier de commande 10. Le bloc diffuseur 1 comprend un boitier annulaire 2 servant de logement, à l'intérieur duquel un actionneur 3 à came est agencé. L'actionneur 3 à came est mobile axialement entre une position de stockage de l'aérosol et une position de diffusion de l'aérosol. Il comprend un plateau contre-came 4 mobile axialement et dont le plan principal est sensiblement perpendiculaire à l'axe de la bouteille aérosol. Le guidage axial est assuré par des plots 8a de guidage fixés sur le boitier 2. Ces plots coopèrent avec des encoches 8b correspondantes prévues de chaque côté du plateau contre-came 4.

La position haute de l'actionneur à came correspond à la position de stockage de l'aérosol. Dans cette position, l'embout de la bouteille est libre, en position fermée. La position abaissée de l'actionneur à came sert de position de diffusion du fluide aérosol.

Pour assurer la diffusion du fluide et l'actionnement de l'éjection du fluide, un logement 5 d'embout de bouteille aérosol est agencé sur le plateau contre-came. Ce logement 5 est adapté pour recevoir l'embout d'une bouteille aérosol.

Depuis de logement, un conduit 6a et un bec diffuseur 6b, reliés au logement d'embout, permettent l'acheminement du fluide vers un point de déversement ou vers un tube connecteur prévu pour acheminer le fluide à distance de la bouteille d'aérosol.

Le déplacement axial de l'actionneur 3 à came est assuré par au moins une came 15 pivotante, montée sur le levier de commande 10. Le levier de commande comprend de préférence deux cames 15 distantes l'une de l'autre, entre lesquelles le logement 5 d'embout est agencé. Les deux flèches F de la figure 1b illustrent l'effort axial vers la bouteille exercé par les cames 15. Les flèches F correspondent dans cet exemple à l'effort axial exercé par les deux cames 5 lorsque le levier de commande 10 pivote. Les pattes de fixation 9 exercent une force dans le sens inverse. Cette force de rappel est de préférence prévue de façon à permettre un retour en position de stockage de l'aérosol si besoin, par soulèvement du plateau contre-came 4. Les pattes 9 sont donc avantageusement dimensionnées de façon à pouvoir exercer cette force de rappel. Ces mêmes pattes permettent par ailleurs d'assurer l'acheminement en matériau à injecter depuis la partie du boîtier annulaire 2 vers l'actionneur 3 à came. Cet apport en matériau injectable permet de réaliser un moulage par injection en une seule et unique pièce.

Pour assurer le déplacement des cames 15 vers le plateau 4 contre-came tel qu'indiqué par les flèches F, le levier de commande 10 est monté pivotant sur le boîtier annulaire 2. Ce montage pivotant est assuré par les ouvertures 7 de chaque côté du boîtier annulaire 2, formant un axe de pivotement P-P. Sur le levier de commande 10, les pivots 14, agencés en opposition, forment un axe de pivotement correspondant P'-P'. Lorsque le levier de commande 10 est assemblé au bloc diffuseur 1, les deux axes P-P et P'-P' se superposent et les deux pivots 14 opposés peuvent tourner librement tout en assurant le maintient du levier de commande 10 avec le bloc diffuseur 1. Ainsi, le levier de commande 10 est l'organe permettant de commander la diffusion du liquide aérosol. Il est constitué d'un corps planaire 12 sensiblement allongé. Lorsqu'il est assemblé au bloc diffuseur 1, ce corps planaire permet de refermer le dessus de l'ensemble de diffusion. Les cames 15 sont agencées sous le corps planaire 12. Les pivots 14 sont fixés aux côtés externes des cames.

L'ensemble diffuseur est avantageusement prévu pour utilisation avec une bombonne de fluide anti-crevaison. Pour une telle utilisation, il est en général requis de transvaser la totalité du contenu de la bouteille dans la roue endommagée. Pour faciliter cette opération, et en particulier pour éviter à l'utilisateur de devoir appuyer pendant plusieurs minutes sur un bouton poussoir ou de devoir maintenir le levier, le levier de commande est agencé pour pouvoir adapter deux positions stables, correspondant à la position de stockage de l'aérosol et à la position de diffusion de l'aérosol. Ce mode bi-stable est assuré par un bec de verrouillage 16 prévu sur au moins une des cames 15. Positionné sous la came, à proximité de la position extrême du mode de diffusion, ce bec permet de verrouiller l'ensemble de diffusion en position de diffusion de l'aérosol. Conçu dans le prolongement du profil périphérique de la came 15, il forme un obstacle à franchir avant d'arriver en fin de course de la came. Une fois l'obstacle franchi, la position de diffusion de l'aérosol est atteinte. L'obstacle formé par le bec empêche un retour à la position initiale de stockage sans un effort additionnel fourni par l'utilisateur via le levier de commande 10.

Le levier de commande 10 comprend par ailleurs un loquet 13 de sécurisation sécable, monté sensiblement dans le prolongement du corps planaire 12. Ce loquet permet d'empêcher tout activation involontaire de l'ensemble de diffusion. Il doit être cassé, à un endroit prévu à cet effet, pour permettre le passage en mode de diffusion de l'aérosol.

Tel qu'illustré à la figure 1b, le boitier annulaire 2 comprend une ouverture latérale prévue pour permettre le passage du bec diffuseur 7 radialement au-delà du boitier.

### Numéros de référence employés sur les figures

- 1: Bloc diffuseur
- 2: Boîtier annulaire
- 3: Actionneur à came
- 4: Plateau contre-came
- 5: Logement d'embout de bouteille d'aérosol
- 6a: Conduit
- 6b: Bec diffuseur
- 7: Ouvertures pour pivots
- 8a: Plots de guidage axial
- 8b: Encoches
- 9: Pattes de fixation
- 10: Levier de commande
- 11: Anse de préhension
- 12: Corps planaire
- 13: Loquet de sécurisation
- 14: Pivots
- 15: Cames
- 16: Bec de verrouillage
- 17: Ouverture latérale

## Revendications

1. Ensemble diffuseur de produit aérosol pour bouteille sous pression, comprenant :
- un levier de commande (10) pourvu d'un corps planaire (12) permettant de commander la diffusion du liquide aérosol
- un bloc diffuseur (1) comportant un boitier annulaire (2) à l'intérieur duquel un actionneur (3) à came est monté mobile axialement entre une position de stockage de l'aérosol et une position de diffusion de l'aérosol, ledit actionneur (3) à came comprenant :
- (i) un plateau contre-came (4), guidé par des plots (8a) de guidage fixés sur le boitier (2) et coopérant avec des encoches (8b) correspondantes du plateau contre-came (4) ;
- (ii) un logement (5) d'embout de bouteille aérosol, agencé sur le plateau contre-came (4) et adapté pour recevoir l'embout d'une bouteille aérosol ;
- (iii) un conduit (6a) et un bec diffuseur (6b), reliés au logement d'embout, et permettant au liquide de diffuser vers un point de déversement du liquide aérosol ;
- le levier de commande (10) étant monté pivotant sur le boîtier annulaire (2) ;
- l'actionneur (3) à came pouvant être poussé axialement vers la bouteille d'aérosol par au moins une came (15) pivotante, montée sur le corps planaire (12) du levier de commande (10) ;
**caractérisé en ce que** :
- l'actionneur (3) à came est poussé axialement à l'opposé de la bouteille d'aérosol par au moins une patte (9) élastique de fixation, reliant élastiquement l'actionneur à came (3) au boitier annulaire (2) ;
- l'actionneur (3) à came est venu de matière avec le boîtier annulaire (2), formant ainsi un bloc diffuseur (1) monopièce.

2. Ensemble diffuseur selon la revendication 1, dans lequel le boitier annulaire (2) comprend des ouvertures (7) sensiblement opposées formant un axe de pivotement P-P et le levier de commande (10) comprend deux pivots (14) opposés formant un axe de pivotement correspondant P'-P' et aptes à coopérer avec les ouvertures (7) du boitier annulaire (2) pour former un montage pivotant du levier de commande dans le boitier annulaire (2), avec superposition des axes P-P et P'-P'.

3. Ensemble diffuseur selon l'une quelconque des revendications 1 ou 2, dans lequel le levier de commande comprend deux cames (15) distantes l'une de l'autre, entre lesquelles le logement (5) d'embout peut s'insérer.

4. Ensemble diffuseur selon la revendication 3, dans lequel les deux cames (15) sont adaptées pour exercer un effort axial F vers la bouteille par contact sur le plateau contre-came (4), de chaque côté du logement (5) d'embout.

5. Ensemble diffuseur selon l'une quelconque des revendications 1 à 4, dans lequel le levier de commande (10) comprend un loquet (13) de sécurisation sécable, monté sensiblement dans le prolongement du corps planaire (12).

6. Ensemble diffuseur selon l'une quelconque des revendications 1 à 5, dans lequel le boitier annulaire (2) comprend une ouverture latérale (17) prévue pour permettre le passage du bec diffuseur (6a) radialement au-delà du boitier.

7. Ensemble diffuseur selon l'une quelconque des revendications 1 à 6, dans lequel au moins une came (15) comprend un bec de verrouillage (16) permettant de placer le levier de commande (10) selon l'une ou l'autre de deux positions bistables, la position fermée correspondant à la position de stockage de l'aérosol et la position ouverte correspondant à la position de diffusion de l'aérosol.

8. Bombe aérosol utilisant un ensemble diffuseur selon l'une quelconque des revendications 1 à 7.

## Patentansprüche

1. Diffusoranordnung für ein Aerosolprodukt für eine Druckflasche, umfassend:
- einen Bedienhebel (10), der mit einem planaren Körper (12) versehen ist und ermöglicht, die Diffusion der Aerosolflüssigkeit zu steuern,
- einen Diffusorblock (1), der ein ringförmiges Gehäuse (2) aufweist, in dessen Innerem ein Nockenaktuator (3) axial beweglich zwischen einer Position der Speicherung des Aerosols und einer Position der Diffusion des Aerosols angebracht ist, wobei der Nockenaktuator (3) umfasst:
- (i) eine Nockenfolgeplatte (4), die von Führungsstücken (8a) geführt wird, die am Gehäuse (2) befestigt sind und mit entsprechenden Aussparungen (8b) der Nockenfolgeplatte (4) zusammenwirken;
- (ii) eine Aufnahme (5) für ein Aerosolflaschen-Endstück, die auf der Nockenfolgeplatte (4) angeordnet ist und dafür ausgelegt ist, das Endstück einer Aerosolflasche aufzunehmen;
- (iii) eine Leitung (6a) und ein Diffusormundstück (6b), die mit der Endstückaufnahme verbunden sind und ermöglichen, dass die Flüssigkeit zu einem Punkt der Abgabe der Aerosolflüssigkeit diffundiert;
- wobei der Bedienhebel (10) schwenkbar an dem ringförmigen Gehäuse (2) angebracht ist;
- wobei der Nockenaktuator (3) durch wenigstens einen schwenkbaren Nocken (15), der an dem planaren Körper (12) des Bedienhebels (10) angebracht ist, axial in Richtung der Aerosolflasche gedrückt werden kann;
**dadurch gekennzeichnet, dass**:
- der Nockenaktuator (3) durch wenigstens eine elastische Befestigungslasche (9), die den Nockenaktuator (3) mit dem ringförmigen Gehäuse (2) elastisch verbindet, axial in eine zur Aerosolflasche entgegengesetzte Richtung gedrückt wird;
- der Nockenaktuator (3) stoffschlüssig mit dem ringförmigen Gehäuse (2) verbunden ist und somit einen einstückigen Diffusorblock (1) bildet.

2. Diffusoranordnung nach Anspruch 1, wobei das ringförmige Gehäuse (2) im Wesentlichen einander gegenüberliegende Öffnungen (7) umfasst, die eine Schwenkachse P-P bilden, und der Bedienhebel (10) zwei einander gegenüberliegende Zapfen (14) umfasst, die eine entsprechende Schwenkachse P'-P' bilden und geeignet sind, mit den Öffnungen (7) des ringförmigen Gehäuses (2) zusammenzuwirken, um eine schwenkbare Lagerung des Bedienhebels in dem ringförmigen Gehäuse (2) zu bewirken, mit Überlagerung der Achsen P-P und P'-P'.

3. Diffusoranordnung nach einem der Ansprüche 1 oder 2, wobei der Bedienhebel zwei voneinander entfernte Nocken (15) umfasst, zwischen die die Endstückaufnahme (5) eingesetzt werden kann.

4. Diffusoranordnung nach Anspruch 3, wobei die zwei Nocken (15) dafür ausgelegt sind, durch Kontakt mit der Nockenfolgeplatte (4) auf jeder Seite der Endstückaufnahme (5) eine axiale Kraft F in Richtung der Flasche auszuüben.

5. Diffusoranordnung nach einem der Ansprüche 1 bis 4, wobei der Bedienhebel (10) einen abtrennbaren Sicherungsriegel (13) umfasst, der im Wesentlichen in der Verlängerung des planaren Körpers (12) angebracht ist.

6. Diffusoranordnung nach einem der Ansprüche 1 bis 5, wobei das ringförmige Gehäuse (2) eine seitliche Öffnung (17) umfasst, die dafür vorgesehen ist, den Durchgang des Diffusormundstücks (6a) radial über das Gehäuse hinaus zu ermöglichen.

7. Diffusoranordnung nach einem der Ansprüche 1 bis 6, wobei wenigstens ein Nocken (15) eine Verriegelungsspitze (16) umfasst, die es ermöglicht, den Bedienhebel (10) in die eine oder andere von zwei bistabilen Positionen zu stellen, wobei die geschlossene Position der Position der Speicherung des Aerosols entspricht und die geöffnete Position der Position der Diffusion des Aerosols entspricht.

8. Spraydose, bei der eine Diffusoranordnung nach einem der Ansprüche 1 bis 7 verwendet wird.

## Claims

1. Aerosol product diffuser assembly for a pressurized bottle, comprising:
- a control lever (10) provided with a planar body (12) making it possible to control the diffusion of the aerosol liquid;
- a diffuser block (1) comprising an annular casing (2) inside which a cam actuator (3) is mounted axially mobile between a storage position of the aerosol and a diffusion position of the aerosol, said cam actuator (3) comprising:
- (i) a cam follower plate (4), also axially mobile and guided by guide studs (8a) fixed to the casing (2) and engaging with corresponding notches (8b) in the cam follower plate (4);
- (ii) an aerosol bottle nozzle housing (5), arranged on the cam follower plate (4) and suitable for receiving the nozzle of an aerosol bottle;
- (iii) a duct (6a) and a diffuser tip (6b), connected to the nozzle housing and enabling the liquid to diffuse to a discharge point of the aerosol liquid;
- the control lever (10) being pivotably mounted on the annular casing (2);
- the cam actuator (3) being able to be pushed axially towards the aerosol bottle by at least one pivoting cam (15), mounted on the planar body (12) of the control lever (10);
**characterized in that**:
- the cam actuator (3) is pushed axially away from the aerosol bottle by at least one elastic fastening tab (9) elastically connecting the cam actuator (3) to the annular casing (2);
- the cam actuator (3) is formed integrally with the annular casing (2), thus forming a one-piece diffuser block (1).

2. Diffuser assembly according to Claim 1, in which the annular casing (2) comprises substantially facing openings (7) that form a pivot axis P-P and the control lever (10) comprises two pivots (14) on opposite sides that form a corresponding pivot axis P'-P' and are capable of engaging with the openings (7) in the annular casing (2) to form a pivoting mounting of the control lever in the annular casing (2), with the axes P-P and P'-P' being superposed.

3. Diffuser assembly according to any one of Claims 1 and 2, in which the control lever comprises two cams (15) spaced apart from each other, between which the nozzle housing (5) can be inserted.

4. Diffuser assembly according to Claim 3, in which the two cams (15) are suitable for exerting an axial force F to the bottle by contact on the cam follower plate (4) on each side of the nozzle housing (5).

5. Diffuser assembly according to any one of Claims 1 to 4, in which the control lever (10) comprises a breakable securing catch (13), mounted substantially extending from the planar body (12).

6. Diffuser assembly according to any one of Claims 1 to 5, in which the annular casing (2) comprises a lateral opening (17) provided to enable the diffuser tip (6a) to project radially beyond the casing.

7. Diffuser assembly according to any one of Claims 1 to 6, in which at least one cam (15) comprises a locking nose (16) that makes it possible to place the control lever (10) in one or the other of the bistable positions, the closed position corresponding to the storage position of the aerosol and the open position corresponding to the diffusion position of the aerosol.

8. Aerosol can using a diffuser assembly according to any one of Claims 1 to 7.
